# EUROPEAN PATENT APPLICATION

(11) **EP 0 851 709 A2**
(43) Date of publication of application: **01.07.1998**
(21) Application number: 97310677.6
(22) Date of filing: 30.12.1997
(51) Int. Cl.: H04Q 11/04

(54) **Improvements in or relating to computer systems**

(30) Priority: 30.12.1996 US 34449 P
(71) Applicant: TEXAS INSTRUMENTS INCORPORATED, Dallas Texas 75265 (US)
(72) Inventor: Izzard, Martin J., Dallas, Texas 75248 (US); Anirudhan, Pillaipakkam N., Grapevine, Texas 76051 (US)
(74) Representative: Legg, Cyrus James Grahame

(57) **Abstract**

A computer system comprising a CPU and at least one non-CPU host coupled to receive data from a network without sustained computer control.

## Description

### FIELD OF THE INVENTION

This invention relates to a method and apparatus for distributing data within a CPU-centric computer system which bypasses the CPU. It particularly pertains to a method and apparatus for handling video data received over a computer network.

### BACKGROUND OF THE INVENTION

Recent advances in video compression networks has led to an increased interest in packet video applications. Synchronous networks such as CATV, satellite and SONET/SDH are suited for video delivery since they have tight jitter tolerance. However packet networks such as Ethernet and ATM and personal computers or workstations which are primarily designed for data traffic, can introduce large jitter due to non-deterministic service time. Media streams contain underlying time base information which needs to be recorded at the decoder for proper synchronized playback. Excessive jitter introduced in this time base can cause problems in clock recovery at the decoder and degrade video and audio quality.

Asynchronous Transfer Mode (ATM) is a network protocol which promises low end-to-end jitter for media traffic. ATM is a connection-oriented network protocol which is based on asynchronous time division multiplexing of fixed length cells. It can efficiently support a flexible mix of traffic such as voice, video and data.

Several studies have addressed performance analyses of packet networks; have studied such metrics as cell loss, delay and jitter. See, for example, W. Matragi, C. Bisdikian, K. Shoraby, "Jitter in ATM networks and its impact on peak rate enforcement", Performance Evaluation 16 , 1992 pg. 35-48 and J. F. Ren, J. Mark, J. Wong, "End-to end performance in ATM networks", ICC 94.

Most efforts to improve the handling of media streams by personal computers, workstations or other terminals have focused on modifying the core of the PC i.e., the CPU system software. New protocols for media traffic and media stream synchronization are topics widely addressed. Real time kernels and optimized interrupt handling have been proposed as possible schemes to provide deterministic packet service time. These approaches require significant enhancements to the basic PC architecture to efficiently support high quality video.

Changes to the architecture of a personal computer (PC) or a workstation require a different architecture than present-day systems, thus making such systems unusable. Considering the large volume of personal computers and workstations already in use worldwide, it would be desirable to have a method of apparatus for handling video and other data flows which repeatedly interrupt the CPU which are compatible with present day systems.

### SUMMARY OF THE INVENTION

It is a general object of the present invention to provide a non-CPU host for a computer system and a method therefor.

Another object of the present invention is to provide a virtual host for a computer system and a method therefor.

A further object of the present invention is to provide apparatus for receiving data from a computer network without sustained CPU control and a method therefor.

These and other objects, and advantages of the present invention are provided in accordance with one aspect of the invention by a computer system comprising a CPU and at least one non-CPU host coupled to receive data from a network without sustained CPU control.

Another aspect of the invention includes a method of operating a computer system having a CPU which includes providing a non-CPU host and coupling data received from a computer network directly to the non-CPU host without sustained CPU control.

Yet another aspect of the invention comprises a computer system having virtual hosts comprising a network interface coupled between a network and an internal bus of a computer system where the network interface has a plurality of logical channels. A plurality of virtual hosts are each coupled to the network interface via the internal bus through a separate one of the plurality of logical channels.

A further aspect of the invention includes a method of distributing data in a computer system. Information is received from a computer network in a network interfacc and transferred directly to a plurality of hosts via an internal bus of a computer system. The information destined for hosts other than a CPU of the computer system do not flow through the CPU nor is information flow to non CPU hosts under sustained CPU control.

Still another aspect of the invention comprises a method of distributing data in a CPU-centric computer system. A plurality of virtual hosts is provided, one of the hosts being a CPU. Data is distributed within the computer system via an internal bus where data to non-CPU hosts does not flow through the CPU nor is data transfer under sustained control of the CPU.

Yet another aspect of the invention comprises a virtual host for a computer system coupleable to a computer network. An application means performs a computer application. An interface circuit is coupled to the application means and coupleable to a computer network. The interface circuit performs a protocol for transferring data between the virtual host and a network interface.

Another aspect of the invention includes a virtual host video card for a computer system coupleable to a computer network. A bus interface circuit is coupleable to an internal bus of the computer system. A video decoder circuit decodes a video signal from the internal bus. A video graphics circuitry drives a video display.

### BRIEF DESCRIPTION OF THE DRAWINGS

The present invention will now be further described by way of example, with reference to the accompanying drawings in which:
Figure 1 is a block diagram of a clock recovery circuit;
Figure 2 is a diagram of the packetization of 2 transport stream packets;
Figure 3 is a histogram of observed packet inter-arrival times;
Figure 4 (a) is a block diagram of a single host model,
Figure 4 (b) is a block diagram of a multiple host model;
Figure 5 is a block diagram of an embodiment of the multiple host model shown in Figure 4 (b) in accordance with the present invention;
Figure 6 is a block diagram of Coder Interface Card (CIC) 508 or 568 of Figure 5;

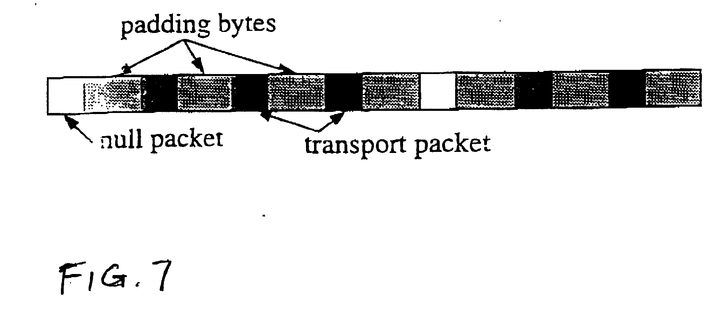

Figure 7 shows the padding of the MPEG-2 stream;
Figure 8 is a block diagram of a test set-up to evaluate system performance;
Figure 9 is a histogram of the input signal;
Figure 10 is a histogram of the end-to-end delay distribution with loop back at the terminal;
Figure 11 is a histogram showing the delay distribution to the local switch; and
Figure 12 is a histogram showing the delay distribution to a remote switch.

### DETAILED DESCRIPTION

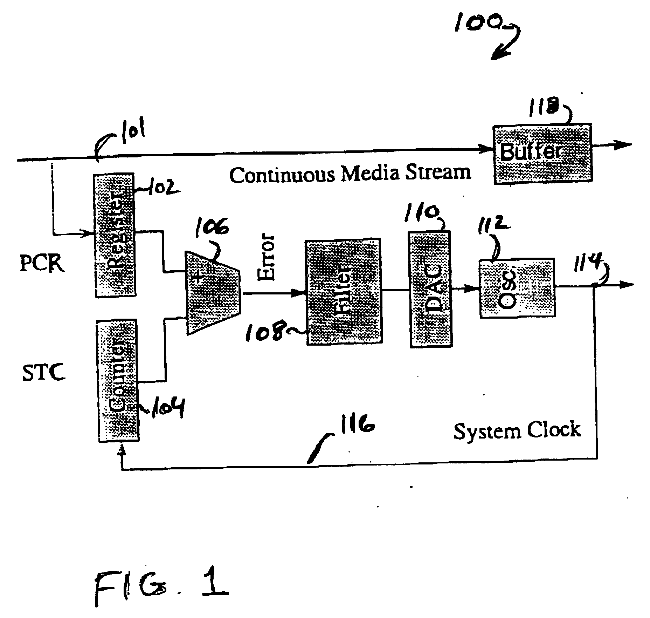

The media stream in an MPEG-2 transport stream (TS) may consist of packets of 188 bytes, as is well known. Time stamps called Program Clock References (PCRs) are placed in the transport stream at fixed intervals. The source of the clock is either a video server or in the case of live video, the video camera. On the receiving end, the MPEG-2 decoder generates a local clock from the PCRs through the use of phase-lock loop, such as the phase-lock loop shown in Figure 1.

The ATM Forum has specified a VOD system protocol reference model. The reference model uses an MPEG-2 transport stream for carriage of audio, video, and data. A packetization scheme allows for one to N MPEG-2 transport stream (TS) packets to be mapped into an AAL 5 - SDU (ATM Aa L 5). The end-to-end jitter in a VOD system is described in "Audio Visual Multimedia Services: Video on Demand Specification 1.0" by the ATM Forum OT Committee, af-saa-0049.000, December 1995, Annex, which is incorporated herein by reference. The source of jitter are packetization, service contention in a network, service contention in the terminal and rate mismatch at layer boundaries.

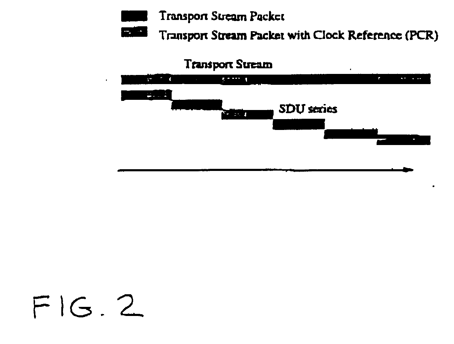

Figure 2 shows the packetization of 2 TS packets per AAL5-SDU. Packetization jitter will occur because of the PCRs are in the first packet of SDU and experience one packet delay more than the PCRs in the second packet of the SDU. For a bit stream of 1.5 M bits/second the jitter is 1.5 M bits divided by 188 times 8 equals approximately 1 millisecond and this is the commonly assumed jitter across a ATM network.

We have analyzed the jitter introduced in a real time MPEG-1 traffic at a SPARC 20 workstation in which a constant bit rate MPEG-1 stream from a server was packetized at a transmitting SPARC station and transported via an ATM LAN to a receiving SPARC station where it was depacketized and delivered via a serial link to a hardware decoder. We observed a 250 millisecond peak-to-peak delay variation jitter due to software packet handling. Contention for CPU resource resulted in jitter as large as 500 milliseconds, which is larger than that expected in ATM networks.

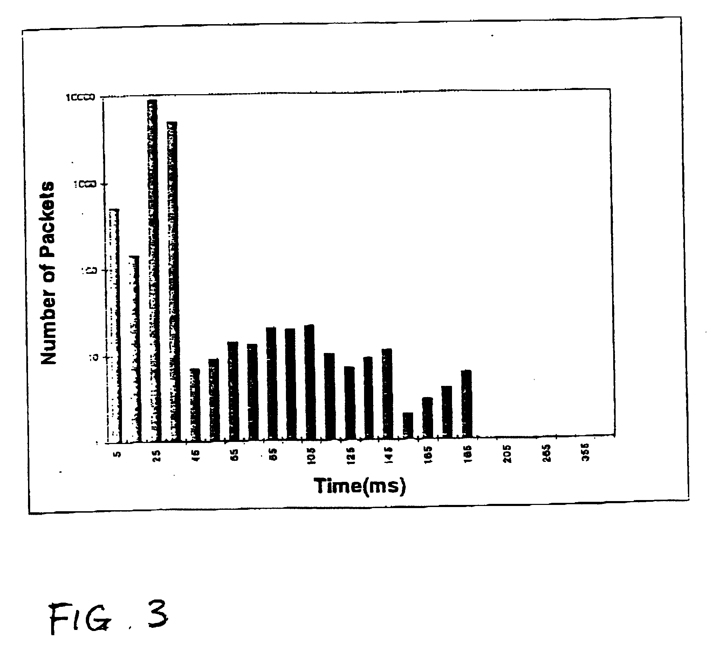

Figure 3 shows a histogram of observed packet inner arrival times at the receiving SPARC station based on this analysis. Note that the histogram would have a delta function of 4 KB packets at 1.4 M bits/second or about 24 milliseconds in the ideal case of zero end-to-end jitter. Our study showed that the terminal jitter, which is mainly due to scheduling by the non-real time operating system, could be a large percentage of the total jitter.

Clock recovery (Figure 1) at the decoder ensures no repeated frames or dropped frames which lead to unpleasant artifacts. Stability of the recovered clock influences the size of the decoder buffers. We simulated MPEG system clock (STC) recovery with varying magnitudes of input jitter, which is the jitter introduced by the network and terminal and seen at the input to the decoder. The input and output phase jitter and the lock transient of the PLL can be combined to estimate the total buffer required to absorb and smooth the input jitter. The results are shown in Table 1.

**Table 1:**

| Clock recovery PLL Simulation Results | | | |
|---|---|---|---|
| INPUT JITTER | FREQUENCY STABILITY | PLL BANDWIDTH | BUFFER (40 Mb/s) |
| 2.4ms | 40ppm | 16mHz | 6.4ms (35KB) |
| 600ms | 50,000ppm | 64mHz | 640ms (3.2MB) |
| 600ms | 15 | 160uHz | ls (5MB) |

We first simulated input jitter of 2.4ms peak-to-peak, the magnitude we expect in ATM network-based MPEG transport with ideal terminal behavior. For STC frequency stability of 40ppm (PLL bandwidth of 16mHz), the output phase locking transient is within 4ms and the steady state phase stability is within 100us. This yields 6.4 ms of buffer necessary to absorb jitter and for locking of the PLL.

We then simulated input jitter of 600ms which is comparable to the workstation MPEG-1 experiment. If we allow the STC frequency stability to be as bad as 50000ppm (PLL bandwidth of 64mHz), the output phase of the STC drifts for a very long time (hours) during acquisition, eventually contributing about 400ms of buffer requirement. In both cases the input phase jitter (600ms) dominates the buffer requirement. Hence reasonable clock recovery is not practical for very large jitter.

Present day computers such as personal computers and workstations are CPU-centric systems. In a CPU-centric system, all operations of the system are under the control of the CPU and all data transfers, including data transfers from a computer network, are handled by the CPU. This requires that the CPU be interrupted every time data arrives at the network interface. The CPU then delivers the data to the application which is running on the computer. For video applications, this requires that the CPU be interrupted for each packet of data that arrives, and this takes most of the CPU resource in current personal computer or workstation computer systems. The CPU is thus unavailable to perform other tasks.

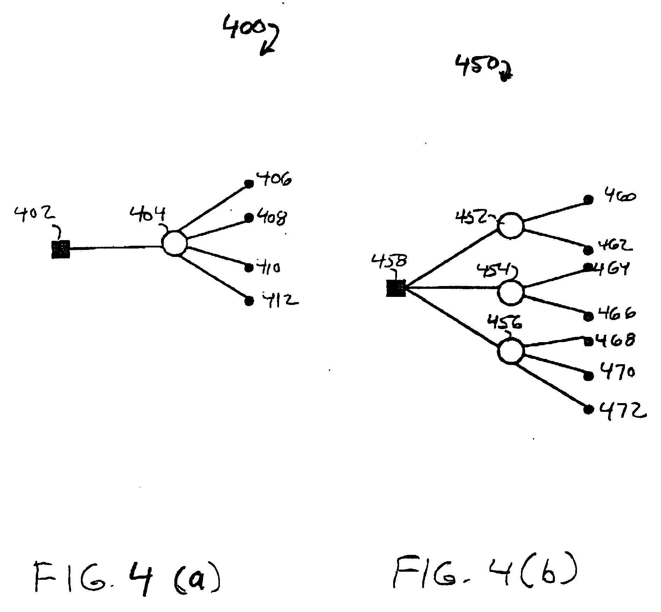

A CPU-centric system can be represented by the single host model shown in Figure 4(a). The network traffic is handled by the host which supports multiple applications and network data for all applications is treated as one composite entity by the host, that is, the host is non-discriminating. This model is most suited for a homogeneous set of applications. The process of passing all data through the single host (CPU) to a video application introduces high and unpredictable latency due to scheduling by the non-real time operating system for the computer. Furthermore, a broadband network protocol such as ATM can simultaneously support different quality of service for different traffic such as voice, video and data. This leads to a more heterogeneous mix of end applications. In this scenario, the network terminal such as shown in Figure 4(a) which uses a single host paradigm can be a bottleneck in utilizing the full capability of the network.

The present invention is shown diagramatically in Figure 4(b) in which a decentralized network terminal architecture is represented by a multiple host model 450. Multiple host model includes virtual hosts 452 and 454 and the physical host 456. The physical host can be the CPU, such as CPU 404 shown in fig 4(a). The virtual hosts 452 and 454 will be described in more detail herein.

The three hosts 452, 454 and 456 are coupled to the network interface 458 by separate channels. The channels referred to here are logical channels which control the flow of data from one part of the system to another; they need not be separate physical channels in the system. Virtual host 452 is coupled to applications 460 and 462. Virtual host 454 is coupled to applications 464 and 466. Physical host 456 is coupled to applications 468, 470 and 472. Application 406 in Figure 4(a) can be the same as application 460 in Figure 4(b). Applications 408, 410 and 412 in Figure 4(a) can be the same as applications 468, 470 and 472 in Figure 4(b). The difference between Figures 4(a) and 4(b) is that in the latter each host independently handles network data sent to an application. That is, the CPU physical host 456 is interrupted when it receives network information required by applications 468, 470 or 472. It is not interrupted when video data is received from the network which is on application 460, as that data passes through virtual host 452 transparent to physical host 456. Thus physical host 456 can continue with its numerical based applications, for example, which is in sharp contrast to the model shown in Figure 4(a) in which the video application 406 requires of the host 404 be interrupted every time video data appears at the network interface 402. In that model, physical host 404 (the CPU) is continually busy in handling the video data and cannot perform other functions. Therefore, applications 408, 410 and 412 remain idle while the video data is processed.

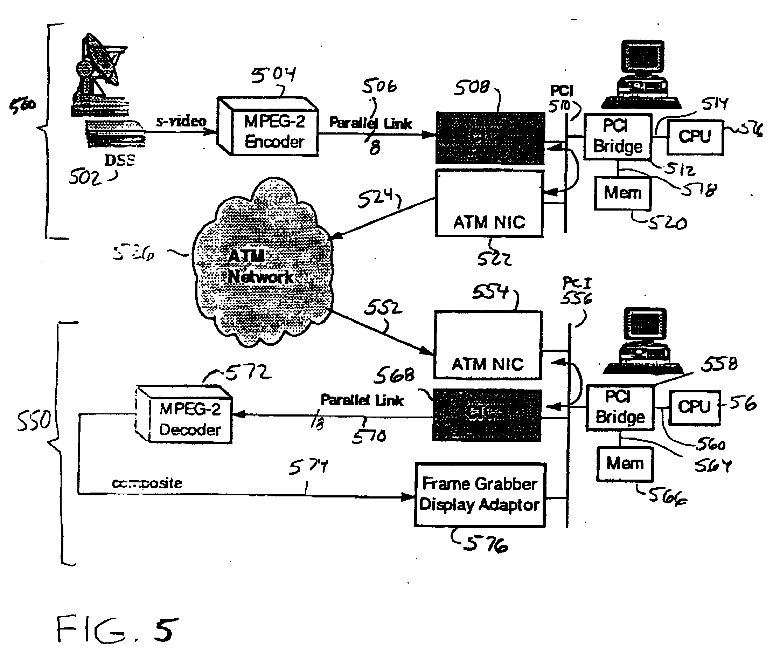

Figure 5 illustrates the prototype of the multiple host model shown in Figure 4(b) as a transmitting terminal shown generally as 500 and a receiving terminal shown generally as 550. The receiving terminal 550 has a physical host CPU 562 which communicates to a PCI bridge 558 via link 560 and from the bridge to a PCI bus 556, in a known manner. In addition, in a known manner memory 566 is coupled to the CPU and the PCI bus via the PCI bridge 558 and link 564. Data is received from the ATM network 526 via link 552 into the ATM NIC (network interface card) 554 from which the data is transferred to the PCI bus. Also attached to the PCI bus is a Coder Interface Card (CIC) 568 and a Frame Grabber Display Adapter 576. The output of the CIC 568 is connected via parallel link 572 and MPEG-2 decoder 572 to produce a composite video on line 574 which is then coupled through frame grabber 576. Preferably the NIC 554 is designed using a Texas Instruments ThunderCELL TDC 1570 Segmentation and Reassembly (SAR) integrated circuit (ThunderCELL and ThunderCELL TDC 1570 are trademarks of Texas Instruments, Incorporated). This integrated circuit is capable of directly communicating with multiple virtual hosts using parallel data structures.

Each virtual host can have multiple channels open to the SAR integrated circuit 554. The CPU 562 acts as the host for data applications. The CIC 568 acts as the virtual host for an external MPEG-2 encoder 504 and /or decoder. The CIC 568 has local memory to store packets as well as control data structures to communicate with the SAR integrated circuit 554. It can support full duplex communication at up to 7 M bytes/second.

The transmit terminal has a similar architecture. Video from a video source, illustrated in Figure 5 as a Digital Satellite System (DSS) 502 is provided to an MPEG-2 encoder 504. The output of the encoder is provided on parallel link 506 to CIC 508. CIC 508 is coupled to PCI bus 510. Also coupled to PCI bus 10 is an ATM NIC 522 which is coupled via link 524 to the ATM network. A PCI bridge 512 is coupled to the PCI bus 510 and to CPU 516 via link 514 and to main memory 520 via link 518. Video data from DSS 502 and encoded by encoder 504 is received by the CIC 508 for transmission through the ATM network 526 to receiving terminal 550.

The video connection is established at call setup time by the CPU 516 establishing a transmit and/or receive channel between the SAR 522 integrated circuit and the CIC 508. At the transmit end 500, the encoder 504 delivers MPEG-2 transport packets via the byte-wide link 506 to the CIC 508. The bytes are parsed, packetized and stored in a transmit FIFO memory. The SAR 522 integrated circuit operates as a bus master and utilizes polling to determine if packets are available to be transmitted. It then segments and transmits these packets over the ATM network 526. At the receive end 550, the SAR 554 integrated circuit receives and reassembles the packets in the receive FIFO memory on the CIC 568. The CIC 568 removes network trailers and sends the MPEG-2 transport packets to the decoder 572 by a byte-wide link 570. The analog video output from the decoder 572 is sent to a frame grabber/ graphics adapter card 576 which displays the video in a window on a display (not shown) connected to the receiving PC 550. It should be noted that the CIC does not interrupt the CPU at any time during transmission or reception of the MPEG-2 packet. In addition, the packets are stored locally in the CIC to avoid access to the main memory in order to avoid utilization of the memory bandwidth. Thus, a very low latency data path is established across the PCI bus for a video connection. This establishes a terminal having very low jitter.

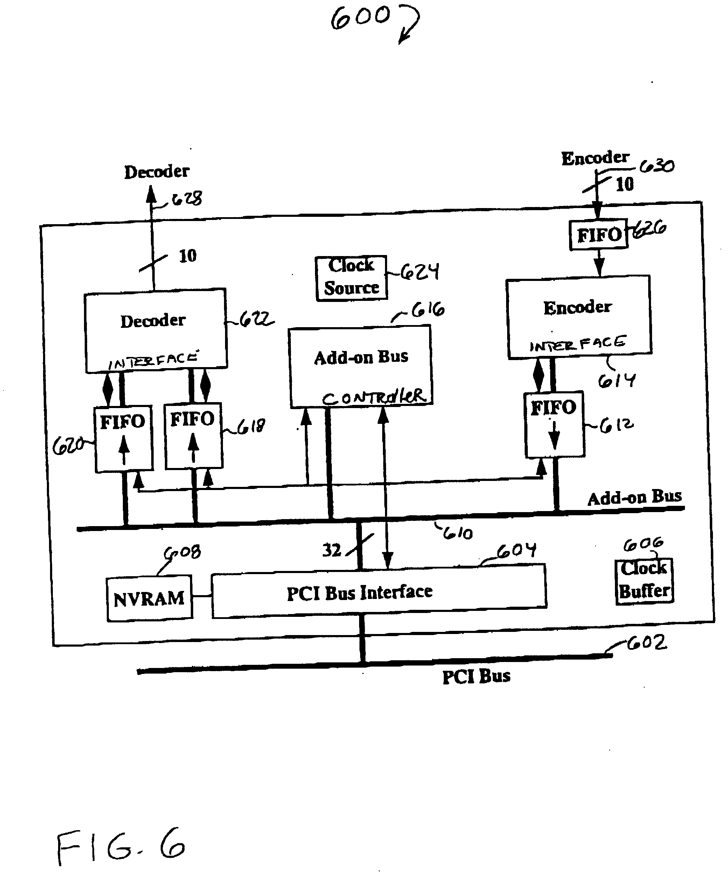

Figure 6 illustrates the design of the CIC generally as 600. The CIC is a PCI target device which adapts the MPEG-2 encoder and decoder to an ATM network. The PCI bus 602 can be the bus 510 of the terminal 500 or the bus 556 of the terminal 550 shown in Figure 5. PCI bus interface integrated circuit 604 is and off-the shelf interface chip which utilizes a passthru mode in which it passes the PCI cycles at pulse speed to the Add-on bus 610 which is at the proprietary local bus. This mode is utilized to support full speed PCI bursts. PCI configuration information is stored in the MVRAM 608. The CIC 600 does not support interrupts.

The Add-on bus controller circuit 616 responds to PCI cycles which generates control signals for the FIFO memories in order to enable read and write cycles. This device can be constructed utilizing a field programmable array device or a digital signal processor (DSP) properly programmed to emulate the functions of the device. The Add-on bus controller circuit 616 performs the "handshake" functions between the encoder and decoder and the PCI bus. Internal registers on this circuit are utilized to store data structures for communication with the SAR integrated circuit 522 or 554 in Figure 5. Transactions on the Add-on bus occur at the PCI clock speed (33 Mhz) while the encoder interface 614 and decoder interface 622 run on a 7 Mhz clock speed. FIFO memories 612, 618 and 620 are used to isolate the two clock domains. The add on bus controller circuit 616 responds to PCI cycles and generates control signals for the FIFO memories to enable read and write cycles for the memories.

The MPEG-2 encoder chosen is a Divicon MPEG-2 encoder, for example, which outputs transport packets on a byte wide link 630 to the CIC 600 as shown in Figure 6. The reason that the link is shown having 10 lines is that this is a synchronous interface which requires a clock line and a signal to indicate during which clock cycle the data is valid, which require two additional lines. This is also true for the output of the decoder interface 622 to the decoder (not shown) via link 628.

The MPEG-2 bit stream rate was chosen to be 7 M bits/second. The encoder pads this with null transport packets to obtain a 5.1 M bytes/second transport stream. The normal transport rate of the encoder that was chosen is 12 M bytes/second. Thus the transport packet stream generated must be padded to reach this rate. This padding is accomplished by adding 255 bytes of padding to every 188 byte transport packet to obtain a line rate of 12 M bytes/second. This requires a FIFO memory 626 to recover the encoder and the encoder interface clock remains.

The encoder interface 614 parses the incoming stream to detect transport packet boundaries. It then writes the transport packets to the transmit FIFO memory 612 with a descriptor which is used for communication to the SAR integrated circuit 552 or 554 of Figure 5. The SAR integrated circuit polls a data structure CIC 600 to determine if packets are ready to be transmitted. If so, it uses bus mastering to first read the packets across the PCI bus and to segment and transmit them over the ATM network. The encoder interface can optionally drop null transport packets as well as time stamp the packets. Time stamping is useful to measure end-to-end packet delay. At the receiving end 550, the SAR integrated circuit 554 reassembles packets in the receive FIFO memory 618. The decoder interface reads the packets from this FIFO memory and strips the AAL5 trailer, checks for transmission errors and sends the transport packets over a byte wide link 628 to the external MPEG-2 decoder. The decoder interface 622 has a local clock which synchronized with the encoder interface clock. This clock is compared with the time stamps on the incoming packets to determine end-to-end delay. The delay values were captured using a logic analyzer. The analog decoded video from the MPEG-2 decoder is fed to a video graphics card which displays it on personal computer. Audio output is sent to speakers in the personal computer.

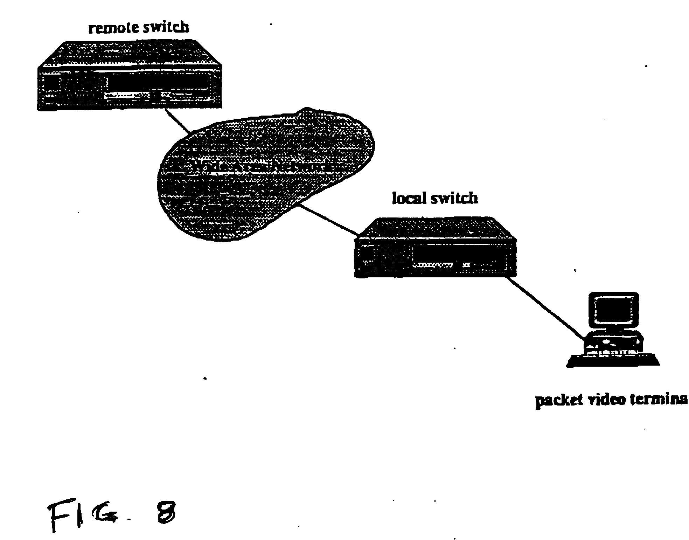

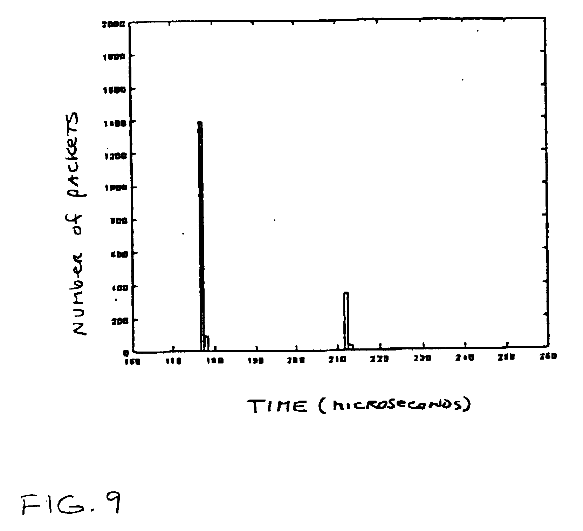

Figure 8 illustrates a test set-up in order to quantitatively evaluate the system performance using end-to-end delay and jitter as metrics. The delay and jitter was measured for 3 cases: loop back at the terminal, round trip to local switch and round trip to a mode switch at a different site. The input stream for all cases was a constant bit rate stream at 7 M bits/second from the MPEG-2 encoder as shown in Figure 9. The interarrival distribution has two peaks due to rate matching at the encoder to achieve an average output rate of 7 M bits/second.

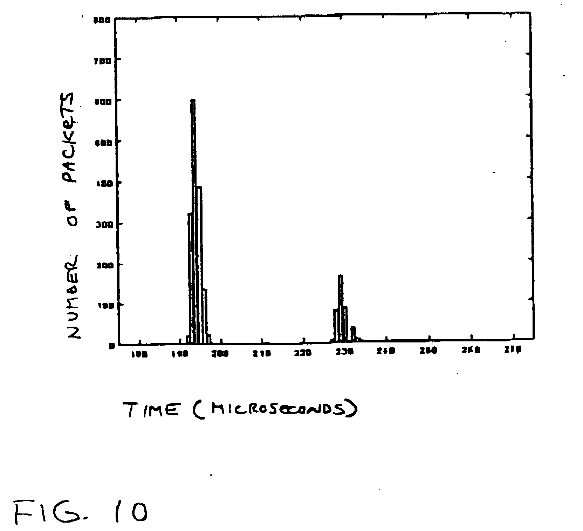

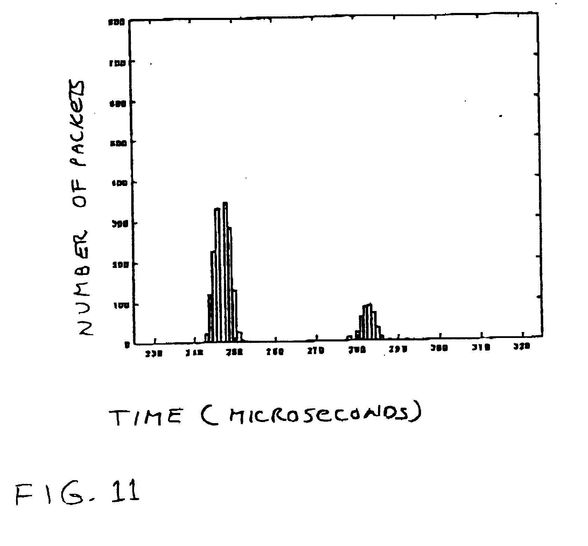

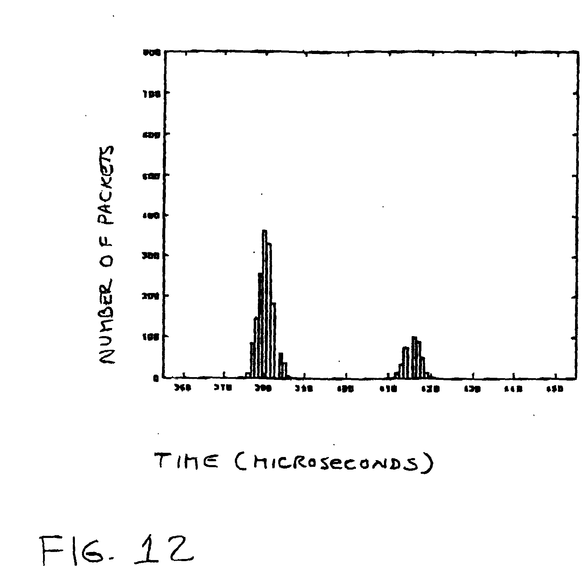

Figure 10 shows the end-to-end delay distribution with the loop back at the terminal. The experiment was repeated several times and the delay distribution was similar. Accordingly, only sample values from one experiment are depicted for simplicity. Distribution is bimodal with similar spacing as the input stream shown in Figure 9. This is an artifact of the buffering in the CIC 600 and at the ATM SAR integrated circuit 522 or 554. The mean delay is 215 microseconds and the jitter is 37 microseconds. Thus only a single packet buffer will be needed for 188 byte packets at 7 megabits/second. The jitter seen at this terminal is much smaller than centralized terminals which involve software handling of packets. Figure 11 and Figure 12 show the delay distribution to the local switch and the remote switch, respectively. It can be seen at the variance increases only slightly by about 10 microseconds, since the switches were very lightly loaded. The mean delay increases by the propagation delay through the switches and link; the delay through the switch being about 15 microseconds.

## Claims

1. A computer system comprising:
a CPU; and
at least one non-CPU host coupled to receive data from a network without sustained CPU control.

2. The system of Claim 1, wherein said CPU is arranged set up a logical channel for data transfer but exerts no further control over data transfer.

3. The system of Claim 1 further comprising:
a network interface coupled between said network and an internal bus of said system.

4. The system of Claim 3 wherein said internal bus is a PCI bus.

5. The system of any of Claims 1 to 4, wherein said network utilizes an ATM protocol.

6. The system of any of Claims 3 to 5, wherein each said non-CPU host has circuitry for performing the protocol of said internal bus.

7. The system of any of Claims 1 to 6, further comprising:
local memory in said non-CPU host.

8. A method of operating a computer system having a CPU comprising the steps of :
providing a non-CPU host; and
coupling data received from a computer network directly to said non-CPU host without sustained CPU control.

9. The method of Claim 8 further comprising the step of:
using said CPU for setting up a logical channel for transfer of data from said computer network to said non-CPU host.

10. The method of Claim 8 or Claim 9, further comprising the steps of:
providing a network interface coupled between said computer network and an internal bus of said computer; and
transferring data from said network interface to said non-CPU host via said bus.

11. The method of Claim 8 or Claim 9, further comprising the steps of:
providing a network interface coupled between said computer network and an internal PCI bus of said computer; and
transferring data from said network interface to said non-CPU host via said PCI bus.

12. The method of any of Claims 8 to 11 further comprising:
transferring said data on said computer network utilizing an ATM protocol.

13. The method of any of Claims 10 to 12, further comprising the step of:
performing in said non-CPU host the protocol of said internal bus.

14. A computer system having virtual hosts comprising:
a network interface coupled between a network and an internal bus of a computer system, said network interface having a plurality of logical channels;
a plurality of virtual hosts each coupled to said network interface via said internal bus through a separate one of said plurality of logical channels.

15. The system of Claim 14, wherein said internal bus is a PCI bus.

16. The system of Claim 14 or Claim 15, wherein said network utilizes an ATM protocol.

17. The system of any of Claims 14 to 16, wherein each virtual host has circuitry for performing the protocol of said internal bus.

18. The system of any of Claims 14 to 17, further comprising:
local memory in each said virtual host.

19. A method of distributing data in a computer system comprising the steps of:
receiving information from a computer network in a network interface;
transferring said information directly to a plurality of hosts via an internal bus of a computer system, whereby said information destined for hosts other than a CPU of said computer system do not flow through said CPU nor is information flow to non CPU hosts under sustained CPU control.

20. The method of Claim 19, further comprising:
transferring said data on said computer network utilizing an ATM protocol.

21. The method of Claim 19 or Claim 20, further comprising the step of:
performing in said non-CPU host the protocol of said internal bus.

22. The method of Claim 19 or Claim 20, further comprising:
performing in said non-CPU host the protocol of a PCI bus.

23. A method of distributing data in a CPU-centric computer system, comprising the steps of:
providing a plurality of hosts, at least one of said hosts being a CPU;
distributing data within said computer system via an internal bus where data to a non-CPU host does not flow through said CPU nor is data transfer under sustained control of said CPU.

24. The method of Claim 23, further comprising:
transferring said data on said computer network utilizing an ATM protocol.

25. The method of Claim 23 or Claim 24, further comprising the step of:
performing in said non-CPU host the protocol of said internal bus.

26. The method of Claim 23 or Claim 24, further comprising the step of:
performing in said non-CPU host the protocol of a PCI bus.

27. A virtual host for a computer system adapted to be coupled to a computer network comprising:
application means for performing a computer application;
an interface circuit coupled to said application means and adapted to be coupled to a computer network, said interface circuit performing a protocol for transferring data between said virtual host and a network interface.

28. The virtual host of Claim 27, wherein said application is video display.

29. The virtual host of Claim 27 or Claim 28, wherein said protocol is PCI bus protocol.

30. The virtual host of any of Claims 27 to 29, further comprising:
a local memory for storing received packets of video data.

31. A virtual host video card for a computer system adapted to be coupled to a computer network comprising:
a bus interface circuit adapted to be coupled to an interval bus of said computer system;
a video decoder circuit adapted to be coupled to said internal bus for decoding a video signal from said internal bus;
video graphics circuitry adapted to be coupled to said video decoder for driving a video display.

32. The virtual host of Claim 31, wherein said application is video display.

33. The virtual host of Claim 31 or Claim 32, wherein said protocol is PCI bus protocol.

34. The virtual host of any of Claims 31 to 33, further comprising:
a local memory for storing received packets of video data.
